(19) Europäisches Patentamt / European Patent Office / Office européen des brevets

(11) **EP 3 235 147 B1**

(12) **EUROPEAN PATENT SPECIFICATION**

(45) Date of publication and mention
of the grant of the patent:
**28.11.2018 Bulletin 2018/48**

(21) Application number: **14811926.6**

(22) Date of filing: **15.12.2014**

(51) Int Cl.:
***H04B 10/61*** (2013.01)

(86) International application number:
**PCT/EP2014/077689**

(87) International publication number:
**WO 2016/095942 (23.06.2016 Gazette 2016/25)**

(54) **CHROMATIC DISPERSION COMPENSATION FILTER**

FILTER ZUR KOMPENSATION VON CHROMATISCHER DISPERSION

FILTRE DE COMPENSATION DE DISPERSION CHROMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.10.2017 Bulletin 2017/43**

(73) Proprietor: **Huawei Technologies Co. Ltd.
Shenzhen, Guangdong 518129 (CN)**

(72) Inventors:
• **ZARUBINSKY, Michael
80992 Munich (DE)**
• **QI, Juan
80992 Munich (DE)**

• **GIDRON, Dori
80992 Munich (DE)**
• **SVERDLOV, Alexander
80992 Munich (DE)**

(74) Representative: **Gill Jennings & Every LLP
MXL
The Broadgate Tower
20 Primrose Street
London EC2A 2ES (GB)**

(56) References cited:
**US-A1- 2009 238 578     US-A1- 2014 099 116
US-B1- 8 792 789**

**Description**

TECHNICAL FIELD

The present disclosure relates to a chromatic dispersion compensation filter, in particular based on Short Time Fourier Transform and a method for compensating chromatic dispersion.

BACKGROUND

Chromatic Dispersion Compensation (CDC) is one of the most important signal processing operation in receivers of Optical Transport Networks (OTN). Chromatic dispersion may lead to Inter-Symbol Interference (ISI) - time spread of the signal over multiple data symbols. For long haul optical transport networks, such spread may achieve thousands of symbols.

In modern optical receivers, the CDC may be done using Optical Digital Signal Processor (oDSP). A Finite Impulse Response (FIR) filter with constant magnitude response and parabolic phase response may be used for the CDC. A required length of the FIR filter $N_{FIR}$ may be proportional to an optical fiber length. For long distance OTNs, the $N_{FIR}$ value becomes extremely large (thousands of taps) and filter implementation in time domain is extremely complex.

To reduce the computational complexity of the CDC, frequency domain filtering may be used. Fig. 1 (of US 7,769,305) shows an exemplary digital part 100 of a coherent optical receiver that is applying frequency domain filtering. The digital part 100 receives two multi-bit digital sample streams 18 sampled by A/D-converters 16, the sample streams 18 corresponding to In-phase (I) and Quadrature (Q) components of each of the received polarizations of an optical signal received by the coherent optical receiver. A deserializer 40 accumulates successive n-bit samples of the In-phase and Quadrature sample streams $I_x$ and $Q_x$ from the A/D converters 16 during a predetermined clock period. The accumulated n-bit samples are then latched into the FFT 42 as a parallel input vector $\{r^I_x+jr^Q_x\}$. The input vector $\{r^I_x+jr^Q_x\}$ is augmented with a null vector {0,0,0,...0} 47 which provides a zero data fill to the remaining input taps of the FFT 42. The FFT filter 42 performs an FFT operation to generate an array R\ representing the frequency domain spectrum of the input vector $\{r^I_x+jr^Q_x\}$. The FDP 44 can then implement a frequency domain processing function $C_x$ 22 to yield a modified array $V^A_x$, which is supplied to the IFFT filter 46 and which can be used for clock recovery 24. The IFFT filter 46 performs an Inverse Fast Fourier Transform operation to yield time domain data 48, in the form of a complex valued vector having a width equal to the IFFT, which is M taps. The IFFT output data 48 is divided into two blocks $\{v^0_x\}$ and $\{v^1_x\}$, of which $\{v^1_x\}$ is delayed by one clock cycle (at 50) and added to $\{v^0_x\}$ (at 52) to yield the DSP output 28 in the form of a complex valued vector $\{v^I_x+jV^Q_x\}$.

Frequency domain (FD) filtering may be implemented by overlap-add or overlap-save methods. The FFT size should be $N_{FFT} > 2 \cdot N_{FIR}$. The total number of complex multiplications per input sample is $\log_2 (N_{FFT}) + 2$.

For example, the system requirement for 100G transmission defines CD tolerance up to +/-30000 ps/nm. Such CD refers to the ISI of about 240 symbols. If the sampling rate is 2 samples/symbol, the required FFT size is 1024 bins (256 x 2 samples/symbol x 2 for 50% overlap), where 50% of the FFT-block is used for processing overlap (50% block overlap between adjacent FFT blocks). This large FFT-size covers a large part of the ASIC, both related to area and power consumption.

Another problem of CDC implementation in frequency domain is limited flexibility. In most cases, the oDSP should be able to support both short and long distance transmission. The FFT size $N_{FFT}$ should correspond to the $N_{FIR}$ value for the maximal transmission distance which is redundant for short distances. Increased FFT size leads to redundant area and power consumption which are required for long distances but become overkill for short distances. Also a large FFT requires more data bits than a short FFT and also longer processing pipeline (and thus, larger processing latency).

US 2014/0099116 A1 describes an optical receiver.

US 8292789 B1 describes a method for chromatic dispersion compensation.

SUMMARY

It is the object of the invention to provide chromatic dispersion compensation with reduced complexity and improved flexibility.

This object is achieved by the features of the independent claims. Further implementation forms are apparent from the dependent claims, the description and the figures.

In order to describe the invention in detail, the following terms, abbreviations and notations will be used:

CD: Chromatic Dispersion
CDC: Chromatic Dispersion Compensation
DSP: Digital Signal Processor

OTN:      Optical Transport Networks
FIR:      Finite Impulse Response
ISI:      Inter-Symbol Interference
FFT:      Fast Fourier Transform
IFFT:     Inverse Fast Fourier Transform
STFT:     Short Time Fourier Transform
ISTFT:    Inverse Short Time Fourier Transform
ZP:       Zero Padding
D:        Delay
FDP:      Frequency Domain Processor
ADC:      Analog-to-Digital Converter
DAC:      Digital-to-Analog Converter

According to a first aspect, the invention relates to a chromatic dispersion compensation filter, comprising: a frequency transform filter configured to process at least two multi-bit sample streams corresponding to a polarization component of a received optical signal to compute an array representative of a spectrum of the received optical signal; a plurality of frequency domain filters configured to filter the array output from the frequency transform filter to derive a modified array, each frequency domain filter configured to apply a selected chromatic dispersion compensating filter function to a respective frequency component of the array, wherein a length of each frequency domain filter is variable; and an inverse frequency transform filter configured to drive a time domain output signal based on the modified array. Furthermore each frequency domain filter comprise a constant delay line, a variable delay line and a multiply-accumulate module.

Such a chromatic dispersion compensation filter in which a length of each frequency domain filter is variable provides improved flexibility at reduced complexity. The chromatic dispersion compensation filter is high flexible as the actual length of the CDC filter may be proportional to the real CD value. This allows reducing a number of operating multipliers for short transmission distances as shown in the figures below. Decreasing the number of active multipliers in the variable length frequency domain filter allows corresponding power saving. The variable length chromatic dispersion compensation filter provides flexible trade-off between performance and power consumption.

In a first possible implementation form of the chromatic dispersion compensation filter according to the first aspect, the frequency transform filter comprises a Short-Time Fourier Transform (STFT) filter based on overlap-save or overlap-add.

Implementing the frequency domain filter instead of an FFT by an STFT either by overlap-save or by overlap-add allows reducing the filter size, e.g. when $N_{FFT}$ is 2048, $N_{STFT}$ may be only 256. Reducing the FFT size allows to short pipeline and to decrease a data bit number. This further reduces power consumption.

Short Time Fourier Transform may be efficiently used for implementing chromatic dispersion compensation. To convert cyclic convolution to linear convolution, overlap-save or overlap-add methods may be used. The selected STFT size may be much smaller than the required CDC FIR filter length. For each frequency bin on the STFT output, a variable-length FIR filter may be used to filter the signal in frequency domain.

In a second possible implementation form of the chromatic dispersion compensation filter according to the first aspect as such or according to the first implementation form of the first aspect, each frequency domain filter comprises a Finite Impulse Response (FIR) filter.

When implementing the variable length frequency domain filter by an FIR filter, the variable length chromatic dispersion compensation filter provides flexible trade-off between performance and power consumption. A further advantage of the variable length chromatic dispersion compensation filter is much smaller frequency domain filter size.

In a third possible implementation form of the chromatic dispersion compensation filter according to the first aspect as such or according to any of the preceding implementation forms of the first aspect, the length of a respective frequency domain filter is variable according to filter coefficient energies of the respective frequency domain filter.

When the length of a respective frequency domain filter is variable according to filter coefficient energies thresholds with respect to the filter coefficients energies can flexibly control power consumption with respect to performance. Increasing the FIR filter coefficients zeroing threshold allows reducing power consumption. Decreasing the threshold allows improving performance.

When the variable-length FIR filter consists of a Variable Delay Line, a Constant Delay Line and a Multiply-Accumulate Module the Multiply-Accumulate Module may have a separate enable circuit for each multiplier which allows switching off a multiplier if the respective coefficient is zero. Coefficient calculation for the specific CD value may consist in calculation of initial coefficient, sorting them according to energy and discarding coefficients with low energy. Initial coefficients may be calculated using the STFT method. After that, they may be multiplied in frequency domain by pulse shape coefficients. Many of initial coefficients may be close to zero because of the specific of the CDC filter and additionally the low gain of the pulse shape filter at high-frequencies. The number of active (non-zero) coefficients may be controlled by setting a threshold. The coefficients with total energy which is lower than the threshold may be zeroed. The threshold may be selected according to the required CDC accuracy. When small coefficients are zeroed, the corresponding multipliers in the Variable-length FIR Filters may be disabled. Thus, the actual length of the CDC filter may be longer for large CD and shorter for small CD thereby providing a high degree of flexibility.

In a fourth possible implementation form of the chromatic dispersion compensation filter according to the fourth implementation form of the first aspect, the variable delay line is put in front of or after the constant delay line. When the variable delay line may be put in front of or after the constant delay line this provides a high flexibility for processing the high energy coefficients in the CD filter function.

In a fifth possible implementation form of the chromatic dispersion compensation filter according to the fourth implementation form or the fifth implementation form of the first aspect, the variable delay line is programmable.

When the variable delay line is programmable, the frequency domain filtering may be matched with the high energy coefficients of the filter function.

In a sixth possible implementation form of the chromatic dispersion compensation filter according to any of the fourth to the sixth implementation forms of the first aspect, the multiply-accumulate module comprises a plurality of multipliers each one coupled to a respective delay line output of the constant delay line. When each multiplier is coupled to a respective delay line output of the constant delay line the multipliers may be flexibly shifted for filtering high energy coefficients of the CD function, for example depending on the distance of the optical fiber.

In an seventh possible implementation form of the chromatic dispersion compensation filter according to the seventh implementation form of the first aspect, filter coefficients of the multipliers are programmable. When filter coefficients of the multipliers are programmable, the filter coefficients may be programmed for compensating the chromatic dispersion.

In a eighth possible implementation form of the chromatic dispersion compensation filter according to the seventh implementation form or the eighth implementation form of the first aspect, each multiplier of the plurality of multipliers is disengageable. When each multiplier is disengageable, non-used multipliers, e.g. multipliers implementing low filter coefficient energies, may be switched off in order to save power.

In a ninth possible implementation form of the chromatic dispersion compensation filter according to any of the fourth to the ninth implementation forms of the first aspect, a maximal length of each frequency domain filter is M; wherein a length of the constant delay line is K-1; wherein a maximal length of the variable delay line is M-K; wherein the multiply-accumulate module comprises a variable number of L multipliers, L ranging from 1 to K, wherein L multipliers are active and K-L multipliers are disabled to save power. Such a configuration provides a high degree of flexibility and saves resources.

According to a second aspect, the invention relates to a method for compensating chromatic dispersion, the method comprising: processing at least two multi-bit sample streams corresponding to a polarization component of a received optical signal by a frequency transform filter to compute an array representative of a spectrum of the received optical signal; filtering the array by a plurality of frequency domain filters to derive a modified array, wherein each frequency domain filter is applying a selected chromatic dispersion compensating filter function to a respective frequency component of the array, wherein a length of each frequency domain filter is variable; and deriving a time domain output signal based on applying an inverse frequency transform filter to the modified array. Furthermore each frequency domain filter comprises a constant delay line , a variable delay line and a multiply-accumulate module. Such a method for compensating chromatic dispersion in which a length of each frequency domain filter is variable provides improved flexibility at reduced complexity. The chromatic dispersion compensation filter is high flexible as the actual length of the CDC filter may be proportional to the real CD value. This allows reducing a number of operating multipliers for short transmission distances. Decreasing the number of active multipliers in the variable length frequency domain filter allows corresponding power saving. The method for CD compensation using variable length chromatic dispersion compensation filter provides flexible trade-off between performance and power consumption.

In a first possible implementation form of the method according to the second aspect, the method comprises: selecting the chromatic dispersion compensating filter function based on a transmission distance of the received optical signal. When selecting the chromatic dispersion compensating filter function based on a transmission distance of the received optical signal, the method for CD compensation may be adapted according to the transmission distance for providing optimum performance in all situations.

In a second possible implementation form of the method according to the second aspect as such or according to the first implementation form of the second aspect the method comprises: setting a number of filter coefficients of a respective frequency domain filter based on a threshold with respect to coefficients of the selected chromatic dispersion compensating filter function. The threshold may be used for flexibly decreasing the number of active multipliers thereby allowing corresponding power savings. Increasing the coefficients zeroing threshold allows reducing power consumption.

In a third possible implementation form of the method according to the second aspect as such or according to any of the preceding implementation forms of the second aspect, the method comprises: initializing a respective frequency domain filter based on the following procedure: calculating an initial set of N coefficients for the respective frequency domain filter; calculating for each coefficient of the initial set a square of the respective coefficient's absolute value; sorting the squares in descending order providing a sorted array of squares; calculating a cumulative sum of the sorted array of squares; calculating a number M of non-zero coefficients based on a threshold with respect to the cumulative sum; and initializing the respective frequency domain filter based on the first M non-zero coefficients.

Such a method allows flexible trade-off between performance and power consumption. Decreasing of the number of active multipliers allows corresponding power savings. Increasing the coefficients zeroing threshold allows reducing power consumption. Decreasing the threshold allows improving performance. A further advantage is the much smaller frequency transform filter size. For example, when implementing an FFT, $N_{FFT}$ may be 2048 while $N_{STFT}$ may be only 256. Reducing the FFT size allows to short pipeline and to decrease a data bit number thereby implementing reduction in power consumption.

BRIEF DESCRIPTION OF THE DRAWINGS

Further embodiments of the invention will be described with respect to the following figures, in which:

Fig. 1 shows a prior art block diagram illustrating the architecture of the digital part 100 of a coherent optical receiver;

Fig. 2 shows a block diagram illustrating a chromatic dispersion compensation filter 200 according to an implementation form;

Figs. 3a-j show time diagrams showing the STFT filtering procedure in a CDC filter according to an implementation form;

Fig. 4 shows a block diagram of a variable-length FIR filter 400 according to an implementation form;

Fig. 5 shows a 3D plot 500 of the initial variable-length filter coefficients of a chromatic dispersion compensation filter as shown in Fig. 2;

Fig. 6 shows a 3D plot 600 of the variable-length filter coefficients shown in Fig. 5 after reduction of small coefficients;

Fig. 7 shows a diagram 700 illustrating the Mean Square Error of the Total CDC Filter Response when applying discarding small coefficients in the CDC filter;

Fig. 8 shows a diagram 800 illustrating CD when reducing the number of operating multiplier in the CDC Filter of Fig. 4; and

Fig. 9 shows a schematic diagram illustrating a method 900 for compensating chromatic dispersion according to an implementation form.

DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

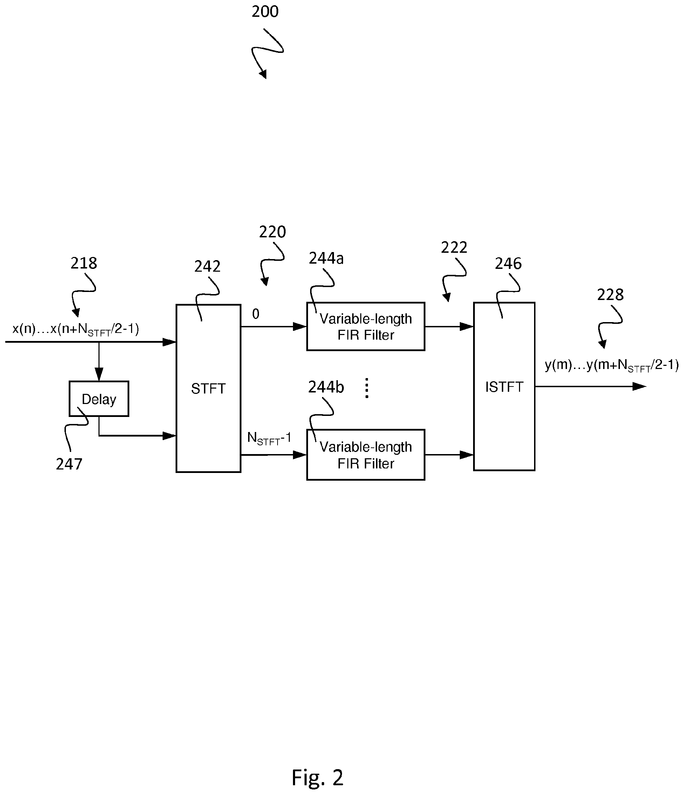

Fig. 2 shows a block diagram illustrating a chromatic dispersion compensation filter 200 according to an implementation form.

The chromatic dispersion compensation filter 200 includes a frequency transform filter 242, a plurality of frequency domain filters 244a, 244b and an inverse frequency transform filter 246. The frequency transform filter 242 is configured to process at least two multi-bit sample streams 218 corresponding to a polarization component $I_X$, $Q_X$ of a received optical signal to compute an array 220 representative of a spectrum of the received optical signal. The plurality of frequency domain filters 244a, 244b is configured to filter the array 220 output from the frequency transform filter 242 to derive a modified array 222. Each frequency domain filter 242 is configured to apply a selected chromatic dispersion compensating filter function to a respective frequency component of the array 220. A length of each frequency domain filter 244a, 244b is variable. The inverse frequency transform filter 246 is configured to derive a time domain output signal 228 based on the modified array 222.

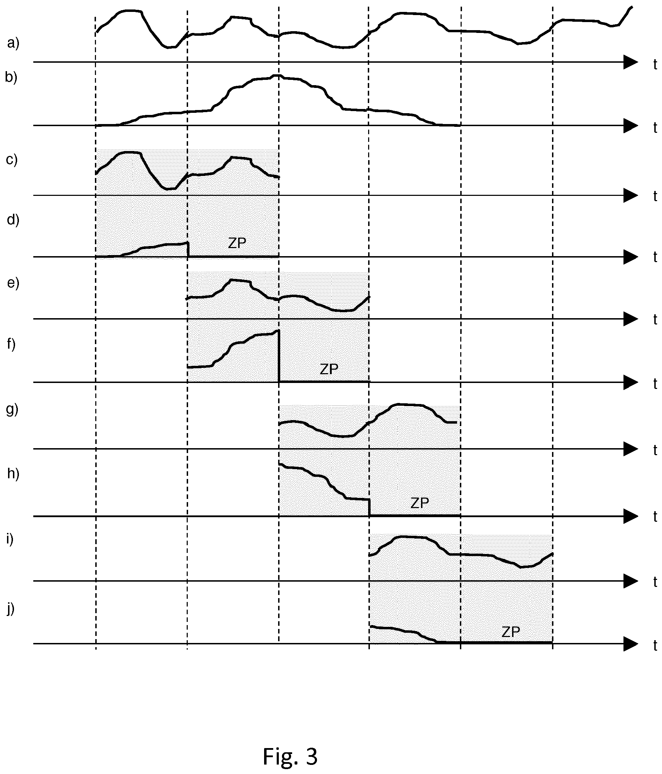

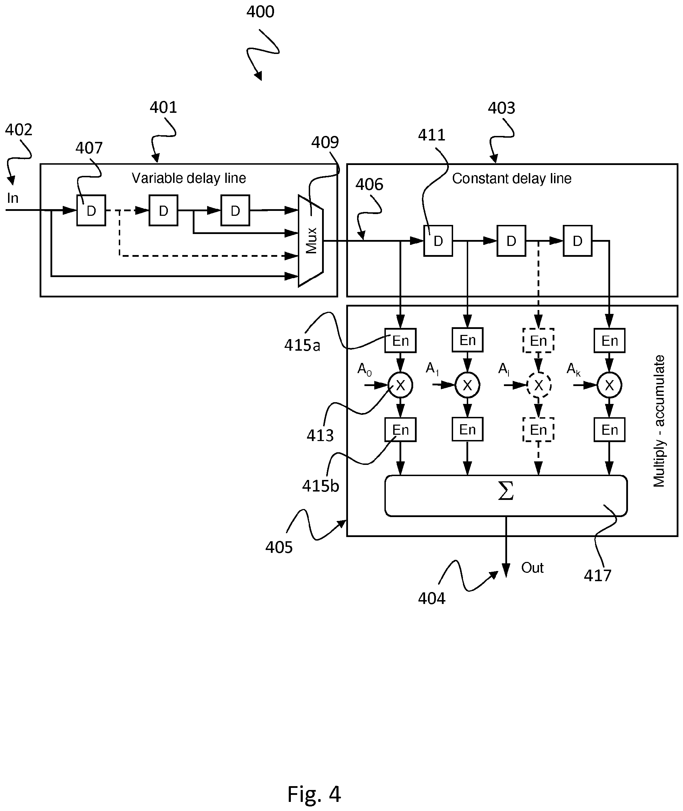

The frequency transform filter 242 may include a Short-Time Fourier Transform (STFT) filter. The STFT filter may operate on the basis of overlap-save or overlap-add. Each frequency domain filter 244a, 244b may include a Finite Impulse Response (FIR) filter. Each frequency transform filter 242 may be of the same length. Alternatively, at least two of the frequency transform filters 242 may be of different length. The length of a respective frequency domain filter 244a, 244b may be variable according to filter coefficient energies of the respective frequency domain filter 244a, 244b, e.g. as described below with respect to Figs. 3 to 7. Each frequency domain filter 244a, 244b may include a constant delay line 403, a variable delay line 401 and a multiply-accumulate module 405 as described below with respect to Fig. 4.

The chromatic dispersion compensation filter 200 may be implemented in a coherent optical receiver receiving an optical signal through an optical link. The received optical signal may be split into orthogonal polarization components X, Y, e.g. by a polarization beam splitter, and then mixed with a local oscillator (LO) signal by a 90° optical hybrid. The composite optical signals emerging from the optical hybrid may be supplied to respective photodetectors which may generate corresponding analog signals. The photodetector signals may be sampled by respective Analog-to-Digital converters 16 to yield the raw multi-bit digital sample streams 18, 218 corresponding to In-phase (I) and Quadrature (Q) components ($I_X$, $Q_X$/$I_Y$, $Q_Y$) of each of the received polarizations X, Y.

The frequency transform filter 242 may be based on the STFT and can be implemented both by overlap-save and overlap-add methods.

For the overlap-save method as illustrated in Fig. 2, the current input vector $x(n)...x(n + N_{STFT}/2\text{-}1)$ and the previous input vector $x(n\text{-}N_{STFT}/2)...x(n\text{-}1)$ derived from the current input vector by applying a delay 247, may be converted with STFT 242. The STFT size $N_{STFT}$ may be much smaller than $2 \cdot N_{FIR}$, i.e. the length $N_{FIR}$ of the frequency domain filter 244a, 244b, for example implemented as FIR filter as shown in Fig. 2. For example, if $N_{FIR}$ is 1024, the $N_{STFT}$ may be 256.

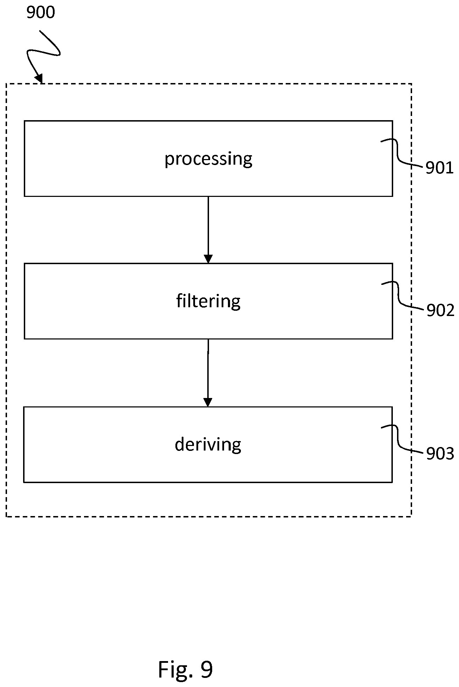

The output 220 of the STFT 242 may be filtered by a plurality of variable-length FIR filters 244a, 244b. Each filter 244a, 244b operates in frequency domain and its input is one of the STFT 242 output bins 220. The number of filters 244a, 244b may be equal to $N_{STFT}$, i.e. the length of the frequency transform filter 242. The length of the filters 244a, 244b may range from 0 to $2 \cdot N_{FIR}/N_{STFT}$ . The method for determination of filter length and a number of non-zero coefficients is described below with respect to Fig. 9.

The output 222 of the plurality of variable-length FIR filters 244a, 244b may be driven to the Inverse Short-Time Fourier Transform (ISTFT) 246. It may be converted again to the time domain providing the output signal 228. The ISTFT 246 size may be equal to $N_{STFT}$.

For overlap-save method, only $y(m)...y(m+N_{STFT}/2\text{-}1)$ samples of the ISTFT output 228 may be used (these may be $N_{STFT}/2$ middle samples), the rest of the outputs 228 may be discarded.

Figs. 3a-j show time diagrams showing the STFT filtering procedure in a CDC filter according to an implementation form. The STFT filtering procedure is illustrated for the case $N_{FIR} = 2 \cdot N_{STFT}$. For clarification, equivalent operations are shown in time domain. Fig. 3a shows the input signal of the STFT filtering over time t, e.g. the input signal 218 according to the complex-valued X polarization component $I_X$, $Q_X$ of the received optical signal described above with respect to Fig. 2. Fig. 3b shows the total impulse response of the CDC FIR filter.

Fig. 3c shows the STFT input of first time section 0. Fig. 3d shows the coefficients of first time section 0 of all FIR filters. The coefficients of first time section 0 may be zero-padded (ZP). The coefficients of first time section 0 that are not zero-padded may represent the first time section of the total impulse response of the CDC FIR filter as depicted in Fig. 3b.

Fig. 3e shows the STFT input of second time section 1 that is overlapped with first time section 0. Fig. 3f shows the coefficients of second time section 1 of all FIR filters. The coefficients of second time section 1 may be zero-padded. The coefficients of second time section 1 that are not zero-padded may represent the second time section of the total impulse response of the CDC FIR filter as depicted in Fig. 3b.

Fig. 3g shows the STFT input of third time section 2. Fig. 3h shows the coefficients of third time section 2 of all FIR filters. The coefficients of third time section 2 may be zero-padded. The coefficients of third time section 2 that are not zero-padded may represent the third time section of the total impulse response of the CDC FIR filter as depicted in Fig. 3b.

Fig. 3i shows the STFT input of fourth time section 3 that is overlapped with third time section 2. Fig. 3j shows the coefficients of fourth time section 3 of all FIR filters. The coefficients of fourth time section 3 may be zero-padded. The coefficients of fourth time section 3 that are not zero-padded may represent the fourth time section of the total impulse response of the CDC FIR filter as depicted in Fig. 3b.

Fig. 4 shows a block diagram of a variable-length FIR Filter 400 according to an implementation form. The variable-length FIR Filter 400 may be implemented as frequency domain filter 244a, 244b in a chromatic dispersion compensation filter 200 as described above with respect to Fig. 2.

The variable-length FIR Filter 400 includes a constant delay line 403, a variable delay line 401 and a multiply-accumulate module 405. The variable delay line 401 may include a variable number of delays 407 for delaying an input signal 402, for example one frequency bin of the array 220 depicted in Fig. 2. The outputs of the delays 407 may be multiplexed by a multiplexer 409, e.g. implemented as an adder, to form the output signal of the variable delay line 401. The output signal of the variable delay line 401 may be an input signal 406 of the constant delay line 403.

The constant delay line 403 may include a constant number of delays 411 for delaying the input signal 406. The outputs of the delays 411 may be passed to respective paths of the multiply-accumulate module 405. Each path of the multiply-accumulate module 405 may include a multiplier 413 to multiply an input signal of that path by a filter coefficient $A_0$, $A_1$, ..., $A_i$, $A_k$ and may include an enabling unit having a first part 415a located in front of the multiplier 413 and a second part 415b located after the multiplier 413. The enabling units 415a, 415b may be configured to enable or disable a respective path of the multiply-accumulate module 405. The constant delay line 403 may further include an adder 417 for adding the processed signals of the multiplier paths which multipliers 413 are enabled. An output signal 404 of the adder 417 may correspond to one frequency bin of the modified array 222 depicted in Fig. 2.

The variable delay line 401 may be put in front of and/or after the constant delay line 403. The variable delay line 401 may be programmable. The multiply-accumulate module 405 may include a plurality of multipliers 413 each one coupled to a respective delay line output of the constant delay line 403. Filter coefficients $A_k$ of the multipliers 413 may be programmable. Each multiplier 413 of the plurality of multipliers may be disengageable, e.g. by using enabling units 415a, 415b coupled in front of or after each one of the multipliers 413 to enable or disable respective filter paths.

In one exemplary configuration, a maximal length of each frequency domain filter 400 may be an integer number M; a length of the constant delay line 403 may be an integer number K-1; a maximal length of the variable delay line 401 may be M-K; the multiply-accumulate module 405 may include a variable number of L multipliers 413; The integer number L may range from 1 to K, wherein L multipliers 413 are active and K-L multipliers 413 are disabled, e.g. by using the enabling units 415a, 415b to save power.

As can be seen from Fig. 4, the filter 400 consists of variable 401 and constant delay lines 403 and a multiply-accumulate module 405. The variable delay 401 and a number of active filter coefficients $A_0$, $A_1$, ..., $A_i$, $A_k$ may be programmable. Unused multipliers may be disabled to reduce power consumption. The transfer function of the *n*-th variable-length FIR filter (at a STFT frequency bin $f_n$) may be modeled as a product of two transfer functions: a CDC filter and a pulse shape filter. The shape filter coefficient may be a single value for the given frequency bin $f_n$:

$$H(n,f) = H_{CDC}(n,f) \cdot H_{PS}(n)$$

where

$$H_{CDC}(n,f) = \sum_{k=0}^{K-1} A(n,k) \cdot e^{-j \cdot 2\pi \cdot k \cdot f}$$

where $K = 2 \cdot N_{FIR}/N_{STFT}$.

The coefficients $A(n,k)$ may be calculated as Fourier transform of time domain FIR coefficients $C_{TD}$

$$A(n,k) = F_N \left\{ C_{TD} \left( k \cdot \frac{N_{STFT}}{2}, ..., (k+1) \cdot \frac{N_{STFT}}{2} - 1 \right) \right\}$$

The CDC part of the variable-length FIR filter for each n may have one or two dominating coefficients. The rest of coefficients may be close to zero. Additionally, the $H_{PS}(n)$ may be very close to zero for high n .

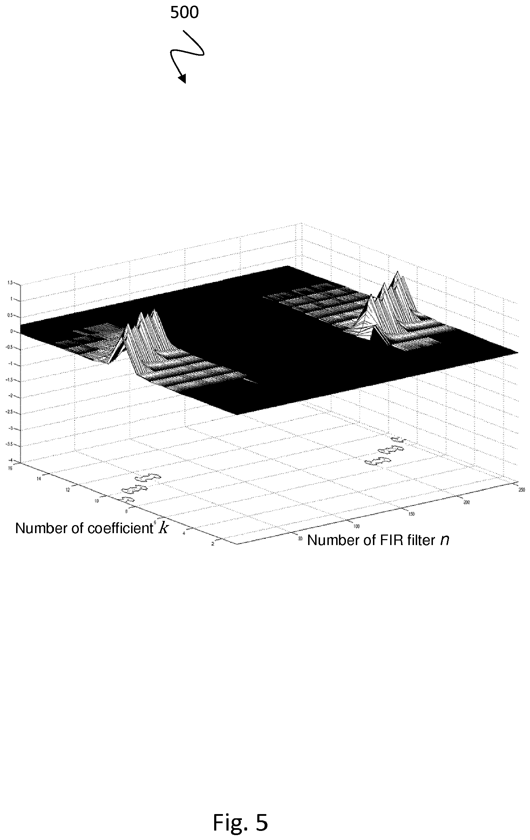

Fig. 5 shows a 3D plot 500 of the initial variable-length filter coefficients of a chromatic dispersion compensation filter as shown in Fig. 2. A root-rise cosine filter is used for pulse shaping. The plot 500 shows that the main power of the filter coefficients is distributed within small areas of the whole plane of number of FIR filters n by number of coefficients k per FIR filter. Therefore, discarding small coefficients of the variable-length FIR filters allows significant reducing the filter complexity without noticeable performance penalty.

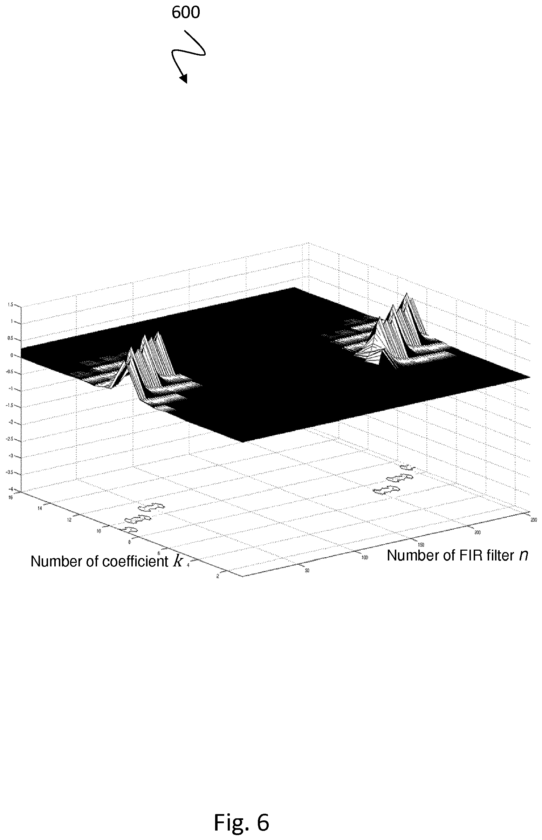

Fig. 6 shows a 3D Plot 600 of the variable-length filter coefficients after reduction of small coefficients. Obviously, no noticeable coefficient difference between Fig. 6 and Fig. 5 can be seen.

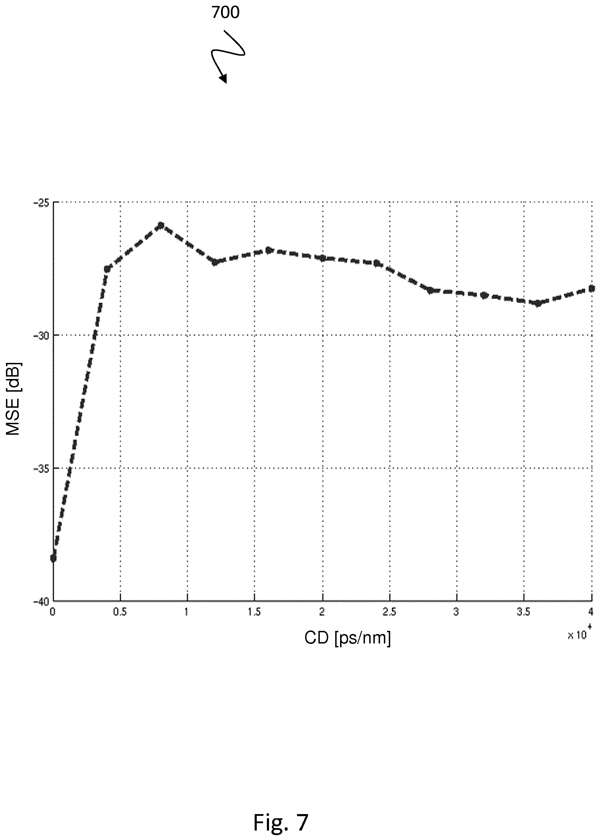

Fig. 7 shows a diagram 700 illustrating the Mean Square Error (MSE) of the total CDC Filter Response when applying discarding small coefficients in the CDC filter. Fig. 7 shows the case of $N_{STFT}$ = 256, $T$ = 0.0025, root-rise cosine pulse shaping filter, The mean square error is plotted versus the CD value. The relative mean square error is less -25dB. This means that the additional error introduced by discarding small coefficients is much smaller than the typical noise level and the performance penalty is negligible.

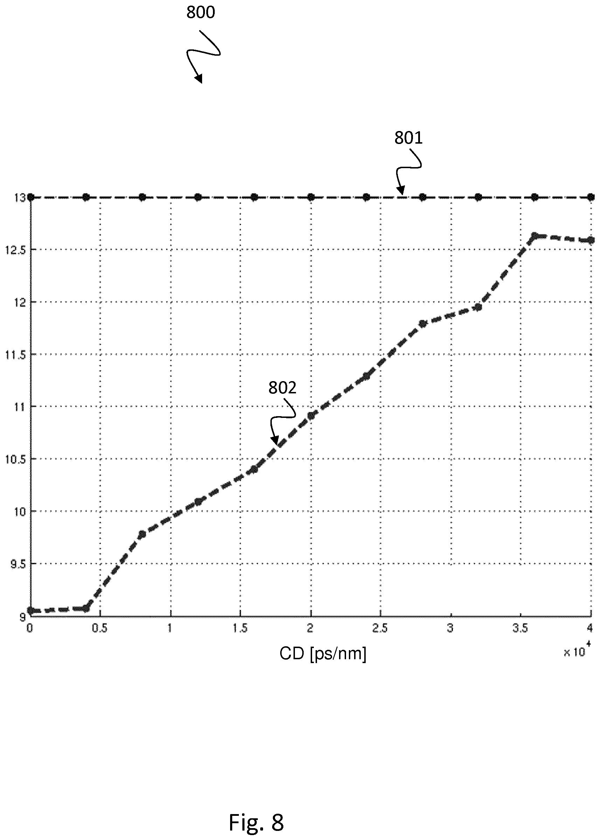

Fig. 8 shows a diagram 800 illustrating CD when reducing the number of operating multipliers in the CDC Filter of Fig. 4. For this graph, the following parameters are used: $N_{FIR}$ = 1024, $N_{FFT}$ = 2048, $N_{STFT}$ = 256 and root-rise cosine pulse shaping. The first curve 801 is a reference where no multipliers are reduced while the second curve 802 describes the performance with the reduced number of operating multipliers as described above.

Fig. 9 shows a schematic diagram illustrating a method 900 for compensating chromatic dispersion according to an implementation form.

The method 900 includes processing 901 at least two multi-bit sample streams 218, e.g. as described above with respect to Fig. 2, corresponding to a polarization component k, Qx of a received optical signal by a frequency transform filter 242 to compute an array 220 representative of a spectrum of the received optical signal, e.g. as described above with respect to Fig. 2. The method 900 includes filtering 902 the array 220 by a plurality of frequency domain filters 244a, 244b, 400 to derive a modified array 222, e.g. as described above with respect to Figs. 2 or Fig. 4, wherein each frequency domain filter 244a, 244b, 400 is applying a selected chromatic dispersion compensating filter function to a respective frequency component of the array 220, wherein a length of each frequency domain filter 244a, 244b, 400 is variable. The method 900 includes deriving 903 a time domain output signal 228 based on applying an inverse frequency transform filter 246, e.g. as described above with respect to Fig. 2, to the modified array 222.

The method 900 may further include selecting the chromatic dispersion compensating filter function based on a transmission distance of the received optical signal. The method 900 may further include setting a number of filter coefficients of a respective frequency domain filter 244a, 244b, 400 based on a threshold with respect to coefficients of the selected chromatic dispersion compensating filter function.

The method 900 may further include initializing a respective frequency domain filter (244a, 244b, 400) based on the following procedure, e.g. as described below: calculating an initial set of N coefficients for the respective frequency domain filter; calculating for each coefficient of the initial set a square of the respective coefficient's absolute value; sorting the squares in descending order providing a sorted array of squares; calculating a cumulative sum of the sorted array of squares; calculating a number M of non-zero coefficients based on a threshold with respect to the cumulative sum; and initializing the respective frequency domain filter based on the first M non-zero coefficients.

The initializing a respective frequency domain filter 244a, 244b, 400 may be based on the procedure as described in the following. A selection of largest coefficients may be done as follows:

- An initial set of $N$ coefficients $A$ may be calculated.

- A square of each coefficient absolute value $B = |A|^2$ may be calculated.

- The results may be sorted, e.g. in descending order: $C = sort(B)$.

- A cumulative sum of sorting results may be calculated, e.g. according to:

$$D(l) = \sum_{i=0}^{l} C(l)$$

- A number M of non-zero coefficients may be calculated, e.g. according to the following equation: $D(M\text{-}1) \geq (1\text{-}T) \cdot D(N\text{-}1)$,
  where T is a threshold. Then, for smaller the approximation becomes better, however at the cost of a larger complexity.

- Only first coefficients 0...$M$-1 may remain unchanged, the rest of coefficients may be zeroed.

- The modified coefficients may be returned to the initial places.

The number of non-zero coefficients may depend on the CD value, e.g. depending on the transmission distance. The described procedure may be performed once on system startup. According to the calculated positions of non-zero coefficients, the variable-length FIR filters may be configured.

Aspects of the disclosure as described above with respect to Figs. 2 to 9 provide high flexibility. The actual length of the CDC filter may be proportional to the real CD value.

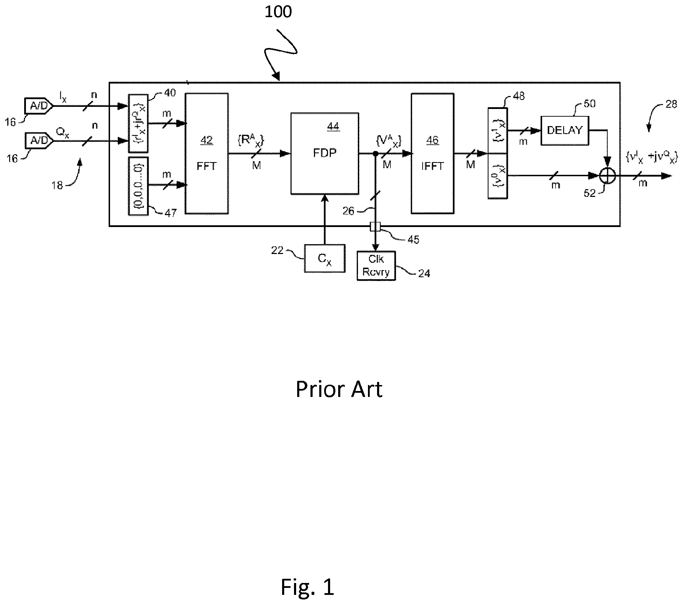

The present disclosure also supports a computer program product including computer executable code or computer executable instructions that, when executed, causes at least one computer to execute the performing and computing steps described herein, in particular the method 900 as described above with respect to Fig. 9 and the techniques described above with respect to Figs. 1 to 8. Such a computer program product may include a readable storage medium storing program code thereon for use by a computer. The program code may perform the method 900 as described above with respect to Fig. 9.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A chromatic dispersion compensation filter (200), comprising:

    a frequency transform filter (242) configured to process at least two multi-bit sample streams (218) corresponding to a polarization component ($I_X$, Qx) of a received optical signal to compute an array (220) representative of a spectrum of the received optical signal;
    a plurality of frequency domain filters (244a, 244b) configured to filter the array (220) output from the frequency transform filter (242) to derive a modified array (222), each frequency domain filter (242) configured to apply a selected chromatic dispersion compensating filter function to a respective frequency component of the array (220); and
    an inverse frequency transform filter (246) configured to derive a time domain output signal (228) based on the modified array (222);
    **characterized in that** a length of each frequency domain filter (244a, 244b) is variable and each frequency domain filter (244a, 244b, 400) comprises a constant delay line (403), a variable delay line (401) and a multiply-accumulate module (405).

2. The chromatic dispersion compensation filter (200) of claim 1, wherein the frequency transform filter (242) comprises a Short time Fourier transform filter based on overlap-save or overlap-add.

3. The chromatic dispersion compensation filter (200) of claim 1 or 2, wherein each frequency domain filter (244a, 244b) comprises a Finite Impulse Response filter.

4. The chromatic dispersion compensation filter (200) of one of claims 1-3, wherein the length of a respective frequency domain filter (244a, 244b) is variable according to filter coefficient energies of the respective frequency domain filter (244a, 244b).

5. The chromatic dispersion compensation filter (200) of claim 1, wherein the variable delay line (401) is put in front of or after the constant delay line (403).

6. The chromatic dispersion compensation filter (200) of claim 1 or 5, wherein the variable delay line (401) is programmable.

7. The chromatic dispersion compensation filter (200) of one of claims 1 or 5-6, wherein the multiply-accumulate module (405) comprises a plurality of multipliers (413) each one coupled to a respective delay line output of the constant delay line (403).

8. The chromatic dispersion compensation filter (200) of claim 7, wherein filter coefficients ($A_k$) of the multipliers (413) are programmable.

9. The chromatic dispersion compensation filter (200) of claim 7 or 8, wherein each multiplier (413) of the plurality of multipliers is disengageable (415a, 415b).

10. The chromatic dispersion compensation filter (200) of one of claims 1 or 5-9,
    wherein a maximal length of each frequency domain filter (244a, 244b, 400) is M;
    wherein a length of the constant delay line (403) is K-1;
    wherein a maximal length of the variable delay line (401) is M-K;
    wherein the multiply-accumulate module (405) comprises a variable number of L multipliers (413), L ranging from 1 to K, wherein L multipliers (413) are active and K-L multipliers (413) are disabled (415a, 415b) to save power.

11. A method (900) for compensating chromatic dispersion, the method comprising:

    processing (901) at least two multi-bit sample streams (218) corresponding to a polarization component ($I_X$, $Q_X$) of a received optical signal by a frequency transform filter to compute an array (220) representative of a spectrum of the received optical signal;
    filtering (902) the array (220) by a plurality of frequency domain filters (244a, 244b, 400) to derive a modified array (222), wherein each frequency domain filter (244a, 244b, 400) is applying a selected chromatic dispersion compensating filter function to a respective frequency component of the array (220); and
    deriving (903) a time domain output signal (228) based on applying an inverse frequency transform filter (246) to the modified array (222);
    **characterized in that** a length of each frequency domain filter (244a, 244b, 400) is variable and each frequency domain filter (244a, 244b, 400) comprises a constant delay line (403), a variable delay line (401) and a multiply-accumulate module (405).

12. The method (900) of claim 11, comprising:
    selecting the chromatic dispersion compensating filter function based on a transmission distance of the received optical signal.

13. The method (900) of claim 11 or 12, comprising:
    setting a number of filter coefficients of a respective frequency domain filter (244a, 244b, 400) based on a threshold with respect to coefficients of the selected chromatic dispersion compensating filter function.

14. The method (900) of one of claims 11-13, comprising: initializing a respective frequency domain filter (244a, 244b, 400) based on the following procedure:

    calculating an initial set of N coefficients for the respective frequency domain filter;
    calculating for each coefficient of the initial set a square of the respective coefficient's absolute value;
    sorting the squares in descending order providing a sorted array of squares;
    calculating a cumulative sum of the sorted array of squares;
    calculating a number M of non-zero coefficients based on a threshold with respect to the cumulative sum; and
    initializing the respective frequency domain filter based on the first M non-zero coefficients.

**Patentansprüche**

1. Filter zur Kompensation der chromatischen Dispersion (200), umfassend:

einen Frequenztransformationsfilter (242), der dazu ausgelegt ist, zumindest zwei Multi-Bit-Abtastströme (218) entsprechend einer Polarisierungskomponente ($I_X$, $Q_X$) eines empfangenen optischen Signals zu verarbeiten, um ein Array (220) zu berechnen, das ein Spektrum des empfangenen optischen Signals repräsentiert; eine Vielzahl von Frequenzbereichsfiltern (244a, 244b), die dazu ausgelegt sind, den Ausgang des Arrays (220) von dem Frequenztransformationsfilter (242) zu filtern, um ein modifiziertes Array (222) zu erhalten, wobei jeder Frequenzbereichsfilter (242) dazu ausgelegt ist, eine ausgewählte Funktion des Filters zur Kompensation der chromatischen Dispersion auf eine jeweilige Frequenzkomponente des Arrays (220) anzuwenden; und einen inversen Frequenztransformationsfilter (246), der dazu ausgelegt ist, ein Zeitdomänenausgangssignal (228) basierend auf dem modifizierten Array (222) zu erhalten; **dadurch gekennzeichnet, dass** eine Länge jedes Frequenzbereichsfilters (244a, 244b) variabel ist und jeder Frequenzbereichsfilter (244a, 244b, 400) eine konstante Verzögerungsleitung (403), eine variable Verzögerungsleitung (401) und ein "Multiply-Accumulate"-Modul (405) umfasst.

2. Filter zur Kompensation der chromatischen Dispersion (200) nach Anspruch 1, wobei der Frequenztransformationsfilter (242) einen Kurzzeit-Fourier-Transformations-Filter basierend auf "Overlap-Save" oder "Overlap-Add" umfasst.

3. Filter zur Kompensation der chromatischen Dispersion (200) nach Anspruch 1 oder 2, wobei jeder Frequenzbereichsfilter (244a, 244b) einen Filter mit endlicher Impulsantwort umfasst.

4. Filter zur Kompensation der chromatischen Dispersion (200) nach einem der Ansprüche 1-3, wobei die Länge eines jeweiligen Frequenzbereichsfilters (244a, 244b) variabel gemäß Filterkoeffizientenenergien des jeweilige Frequenzbereichsfilters (244a, 244b) ist.

5. Filter zur Kompensation der chromatischen Dispersion (200) nach Anspruch 1, wobei die variable Verzögerungsleitung (401) vor oder nach der konstanten Verzögerungsleitung (403) angeordnet ist.

6. Filter zur Kompensation der chromatischen Dispersion (200) nach Anspruch 1 oder 5, wobei die variable Verzögerungsleitung (401) programmierbar ist.

7. Filter zur Kompensation der chromatischen Dispersion (200) nach einem der Ansprüche 1 oder 5-6, wobei das "Multiply-Accumulate"-Modul (405) eine Vielzahl von Multiplizierern (413) umfasst, die jeweils an einen jeweiligen Verzögerungsleitungsausgang der konstanten Verzögerungsleitung (403) gekoppelt sind.

8. Filter zur Kompensation der chromatischen Dispersion (200) nach Anspruch 7, wobei Filterkoeffizienten ($A_k$) des Multiplizierers (413) programmierbar sind.

9. Filter zur Kompensation der chromatischen Dispersion (200) nach Anspruch 7 oder 8, wobei jeder Multiplizierer (413) der Vielzahl von Multiplizierern trennbar ist (415a, 415b).

10. Filter zur Kompensation der chromatischen Dispersion (200) nach einem der Ansprüche 1 oder 5-9, wobei eine maximale Länge jedes Frequenzbereichsfilters (244a, 244b, 400) M ist; wobei eine Länge der konstanten Verzögerungsleitung (403) K-1 ist; wobei eine maximale Länge der variablen Verzögerungsleitung (401) M-K ist; wobei das "Multiply-Accumulate"-Modul (405) eine variable Anzahl von L Multiplizierern (413) umfasst, wobei L im Bereich von 1 bis K liegt, wobei L Multiplizierer (413) aktiv sind und K-L Multiplizierer (413) deaktiviert sind (415a, 415b), um Strom zu sparen.

11. Verfahren (900) zum Kompensieren der chromatischen Dispersion, das Verfahren umfassend:

Verarbeiten (901) von zumindest zwei Multi-Bit-Abtastströmen (218) entsprechend einer Polarisierungskomponente ($I_X$, $Q_X$) eines empfangenen optischen Signals durch einen Frequenztransformationsfilter, um ein Array (220) zu berechnen, das ein Spektrum des empfangenen optischen Signals repräsentiert; Filtern (902) des Arrays (220) durch eine Vielzahl von Frequenzbereichsfiltern (244a, 244b, 400), um ein modifiziertes Array (222) zu erhalten, wobei jeder Frequenzbereichsfilter (244a, 244b, 400) eine ausgewählte Funktion des Filters zur Kompensation der chromatischen Dispersion auf eine jeweilige Frequenzkomponente des Arrays (220) anwendet; und Erhalten (903) eines Zeitdomänenausgangssignals (228) basierend auf einem Anwenden eines inversen Frequenztransformationsfilters (246) auf das modifizierte Array (222);
**dadurch gekennzeichnet, dass** eine Länge jedes Frequenzbereichsfilters (244a, 244b, 400) variabel ist und jeder Frequenzbereichsfilter (244a, 244b, 400) eine konstante Verzögerungsleitung (403), eine variable Verzögerungsleitung (401) und ein Multiply-Accumulate-Modul (405) umfasst.

12. Verfahren (900) nach Anspruch 11, umfassend:
Auswählen der Funktion des Filters zur Kompensation der chromatischen Dispersion basierend auf einer Übertragungsstrecke des empfangenen optischen Signals.

13. Verfahren (900) nach Anspruch 11 oder 12, umfassend:
Festlegen einer Anzahl von Filterkoeffizienten eines jeweiligen Frequenzbereichsfilters (244a, 244b, 400) basierend auf einem Schwellwert in Bezug auf Koeffizienten der ausgewählten Funktion des Filters zur Kompensation der chromatischen Dispersion.

14. Verfahren (900) nach einem der Ansprüche 11-13, umfassend: Initialisieren eines jeweiligen Frequenzbereichsfilters (244a, 244b, 400) basierend auf der folgenden Verfahrensweise:

Berechnen eines anfänglichen Satzes von N Koeffizienten für den jeweiligen Frequenzbereichsfilter;
Berechnen, für jeden Koeffizienten des anfänglichen Satzes, eines Quadrats des absoluten Werts des jeweiligen Koeffizienten;
Sortieren der Quadrate in absteigender Reihenfolge, wodurch ein sortiertes Array von Quadraten bereitgestellt wird;
Berechnen einer kumulierten Summe des sortierten Arrays von Quadraten;
Berechnen einer Anzahl M von Nicht-Null-Koeffizienten basierend auf einem Schwellwert in Bezug auf die kumulierte Summe; und
Initialisieren des jeweiligen Frequenzbereichsfilters basierend auf den ersten M Nicht-Null-Koeffizienten.

## Revendications

1. Filtre de compensation de dispersion chromatique (200), comprenant :

un filtre à transformée fréquentielle (242) configuré pour traiter au moins deux flux échantillonnés multibits (218) correspondant à une composante de polarisation ($I_X$, $Q_X$) d'un signal optique reçu pour calculer une matrice (220) représentative d'un spectre du signal optique reçu ;
une pluralité de filtres dans le domaine fréquentiel (244a, 244b) configurés pour filtrer la matrice (220) produite par le filtre à transformée fréquentielle (242) pour dériver une matrice modifiée (222), chaque filtre dans le domaine fréquentiel (242) étant configuré pour appliquer une fonction de filtrage de compensation de dispersion chromatique sélectionnée à une composante fréquentielle respective de la matrice (220) ; et
un filtre à transformée fréquentielle inverse (246) configuré pour dériver un signal de sortie dans le domaine temporel (228) sur la base de la matrice modifiée (222) ;
**caractérisé en ce qu'**une longueur de chaque filtre dans le domaine fréquentiel (244a, 244b) est variable et chaque filtre dans le domaine fréquentiel (244a, 244b, 400) comprend une ligne à retard constant (403), une ligne à retard variable (401) et un module de multiplication-accumulation (405).

2. Filtre de compensation de dispersion chromatique (200) de la revendication 1, dans lequel le filtre à transformée fréquentielle (242) comprend un filtre à transformée de Fourier à court terme basé sur un chevauchement-sauvegarde ou un chevauchement-ajout.

3. Filtre de compensation de dispersion chromatique (200) de la revendication 1 ou 2, dans lequel chaque filtre dans le domaine fréquentiel (244a, 244b) comprend un filtre à réponse impulsionnelle finie.

4. Filtre de compensation de dispersion chromatique (200) d'une des revendications 1 à 3, dans lequel la longueur d'un filtre dans le domaine fréquentiel respectif (244a, 244b) est variable en fonction d'énergies de coefficients de filtre du filtre dans le domaine fréquentiel respectif (244a, 244b).

5. Filtre de compensation de dispersion chromatique (200) de la revendication 1, dans lequel la ligne à retard variable (401) est placée avant ou après la ligne à retard constant (403).

**6.** Filtre de compensation de dispersion chromatique (200) de la revendication 1 ou 5, dans lequel la ligne à retard variable (401) est programmable.

**7.** Filtre de compensation de dispersion chromatique (200) d'une des revendications 1 ou 5 à 6, dans lequel le module de multiplication-accumulation (405) comprend une pluralité de multiplicateurs (413), chacun couplé à une sortie de ligne à retard respective de la ligne à retard constant (403).

**8.** Filtre de compensation de dispersion chromatique (200) de la revendication 7, dans lequel des coefficients de filtre ($A_k$) des multiplicateurs (413) sont programmables.

**9.** Filtre de compensation de dispersion chromatique (200) de la revendication 7 ou 8, dans lequel chaque multiplicateur (413) de la pluralité de multiplicateurs est désengageable (415a, 415b).

**10.** Filtre de compensation de dispersion chromatique (200) d'une des revendications 1 ou 5 à 9,
dans lequel une longueur maximale de chaque filtre dans le domaine fréquentiel (244a, 244b, 400) est M ;
dans lequel une longueur de la ligne à retard constant (403) est K-1 ;
dans lequel une longueur maximale de la ligne à retard variable (401) est M-K ;
dans lequel le module de multiplication-accumulation (405) comprend un nombre variable de L multiplicateurs (413), L allant de 1 à K, L multiplicateurs (413) étant actifs et K-L multiplicateurs (413) étant désactivés (415a, 415b) pour économiser de l'énergie.

**11.** Procédé (900) destiné à compenser une dispersion chromatique, le procédé comprenant :

le traitement (901) d'au moins deux flux échantillonnés multibits (218) correspondant à une composante de polarisation ($I_X$, $Q_X$) d'un signal optique reçu par un filtre à transformée fréquentielle pour calculer une matrice (220) représentative d'un spectre du signal optique reçu ;
le filtrage (902) de la matrice (220) par une pluralité de filtres dans le domaine fréquentiel (244a, 244b, 400) pour dériver une matrice modifiée (222), chaque filtre dans le domaine fréquentiel (244a, 244b, 400) appliquant une fonction de filtrage de compensation de dispersion chromatique sélectionnée à une composante fréquentielle respective de la matrice (220) ; et
la dérivation (903) d'un signal de sortie dans le domaine temporel (228) sur la base de l'application d'un filtre à transformée fréquentielle inverse (246) à la matrice modifiée (222) ;
**caractérisé en ce qu'**une longueur de chaque filtre dans le domaine fréquentiel (244a, 244b, 400) est variable et chaque filtre dans le domaine fréquentiel (244a, 244b, 400) comprend une ligne à retard constant (403), une ligne à retard variable (401) et un module de multiplication-accumulation (405).

**12.** Procédé (900) de la revendication 11, comprenant :
la sélection de la fonction de filtrage de compensation de dispersion chromatique sur la base d'une distance de transmission du signal optique reçu.

**13.** Procédé (900) de la revendication 11 ou 12, comprenant :
le réglage d'un nombre de coefficients de filtre d'un filtre dans le domaine fréquentiel respectif (244a, 244b, 400) sur la base d'un seuil par rapport à des coefficients de la fonction de filtrage de compensation de dispersion chromatique sélectionnée.

**14.** Procédé (900) d'une des revendications 11 à 13, comprenant: l'initialisation d'un filtre dans le domaine fréquentiel respectif (244a, 244b, 400) sur la base de la procédure suivante :

calculer un ensemble initial de N coefficients pour le filtre dans le domaine fréquentiel respectif ;
calculer pour chaque coefficient de l'ensemble initial un carré de la valeur absolue du coefficient respectif ;
trier les carrés par ordre décroissant pour obtenir une matrice triée de carrés ;
calculer une somme cumulative de la matrice triée de carrés ;
calculer un nombre M de coefficients non nuls sur la base d'un seuil par rapport à la somme cumulative ; et
initialiser le filtre dans le domaine fréquentiel respectif sur la base des M premiers coefficients non nuls.

Prior Art

Fig. 1

200

218

x(n)…x(n+$N_{STFT}$/2-1)

242

Delay

247

STFT

220

0

$N_{STFT}$-1

244a

Variable-length
FIR Filter

244b

Variable-length
FIR Filter

222

246

ISTFT

228

y(m)…y(m+$N_{STFT}$/2-1)

Fig. 2

a)

b)

c)

d)
ZP

e)

f)
ZP

g)

h)
ZP

i)

j)
ZP

Fig. 3

400

401

402

407

409

403

411

406

In

Variable delay line

D    D    D

Mux

Constant delay line

D    D    D

415a

En    En    En    En

$A_0$    $A_1$    $A_i$    $A_k$

X    X    X    X

413

En    En    En    En

415b

$\Sigma$

405

Multiply - accumulate

404

Out

417

Fig. 4

500

Number of coefficient $k$

Number of FIR filter $n$

Fig. 5

600

Number of coefficient $k$

Number of FIR filter $n$

Fig. 6

700

Fig. 7

800

801

802

CD [ps/nm]

Fig. 8

900

processing — 901

filtering — 902

deriving — 903

Fig. 9

**EP 3 235 147 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7769305 B
- US 20140099116 A1
- US 8292789 B1